Europäisches Patentamt

(19) European Patent Office

Office européen des brevets

(11) Publication number: **0 295 943**
**A2**

(12) **EUROPEAN PATENT APPLICATION**

(21) Application number: **88305558.4**

(22) Date of filing: **17.06.88**

(51) Int. Cl.⁴: **B 32 B 27/12**

(30) Priority: **19.06.87 JP 95254/87**

(43) Date of publication of application:
**21.12.88 Bulletin 88/51**

(84) Designated Contracting States: **DE FR GB NL**

(71) Applicant: **Sekisui Jushi Kabushiki Kaisha**
**4-4, Nishitemma 2-chome Kita-ku**
**Osaka (JP)**

(72) Inventor: **Tsuyuguchi, Kenichi**
**1495, Oaya-Shimotakano**
**Toyonaka-cho Mitoyo-gun Kagawa (JP)**

(74) Representative: **Myerscough, Philip Boyd et al**
**J.A.Kemp & Co. 14, South Square Gray's Inn**
**London, WC1R 5EU (GB)**

(54) **Food mat.**

(57) This invention provides a mat for food which, when placed in a tray or the like, absorbs blood and other body fluid from fish, animal meat or other food placed in the tray and keeps the drippings so absorbed completely separate from the food. The mat comprises a synthetic resin layer (1), which may be opaque or may be transparent and have an aluminium layer (2) deposited thereon, an adhesive layer (3), a nonwoven fabric (4), a layer (5) consisting of a polymeric water absorbent and a solvent-type heat sealing agent, and a paper sheet (6), at least the synthetic resin film layer (1) and adhesive layer (3) having openings (7) therein for passage of liquid.

FIG. 2

EP 0 295 943 A2

**Description**

## Food mat

## BACKGROUND OF THE INVENTION

1. Field of the Invention

The present invention relates to a food mat for use in accommodating a fish, a dressed meat loaf or the like in a vessel such as a tray.

2. Description of the Prior Art

The mat for placing a food thereon which has heretofore been available on the market is either a nonwoven fabric or moisture-proof paper cut to the inner size of the food tray or a laminate sheet comprising a nonwoven fabric bonded to a polypropylene foam with an adhesive. However, when a fish, a dressed meat loaf or the like is placed thereon, the blood and other body fluid and so on (which will hereinafter be referred to as drippings) exuded from the meat or the like is not sufficiently absorbed. Furthermore, such mat is not sanitary because lints or fine fibers tend to deposit on the meat. The drippings also collect on the meat to detract from the appearance of the meat and its marketability.

## OBJECTS AND SUMMARY OF THE INVENTION

It is an object of the invention to provide a food mat which is capable of absorbing substantially all the drippings exuded from the food placed thereon and keeping the absorbed drippings completely isolated from the food.

It is another object of the invention to provide a food mat which precludes pooling of drippings, which favor growth of bacteria, beneath the food placed thereon and thereby prevents spoilage of the food.

It is still another object of the invention to provide a food mat which prevents collection of drippings around the food placed thereon to assure that only the substance of the food is visible, giving a sense of cleanliness and adding to the marketability of the food.

It is another object of the invention to provide a food mat such that when the product is radiation-sterilized with ultraviolet light or the like, it reflects the radiation to enhance the sterilizing effect.

It is a further object of the invention to provide a food mat which does not release a polymeric absorbent therefrom and is easy to handle.

Other objects and advantages of the invention will become apparent as the following detailed description proceeds.

## BRIEF DESCRIPTION OF THE DRAWINGS

FIG. 1 is a perspective view showing an embodiment of the invention;

Fig. 2 is a partial cross-section view taken along the line II-II of Fig. 1;

Fig. 3 is a partial section view showing another embodiment of the invention;

Fig. 4 and Fig. 5 each is a schematic diagram showing an exemplary manufacturing process for a portion of the mat according to the invention;

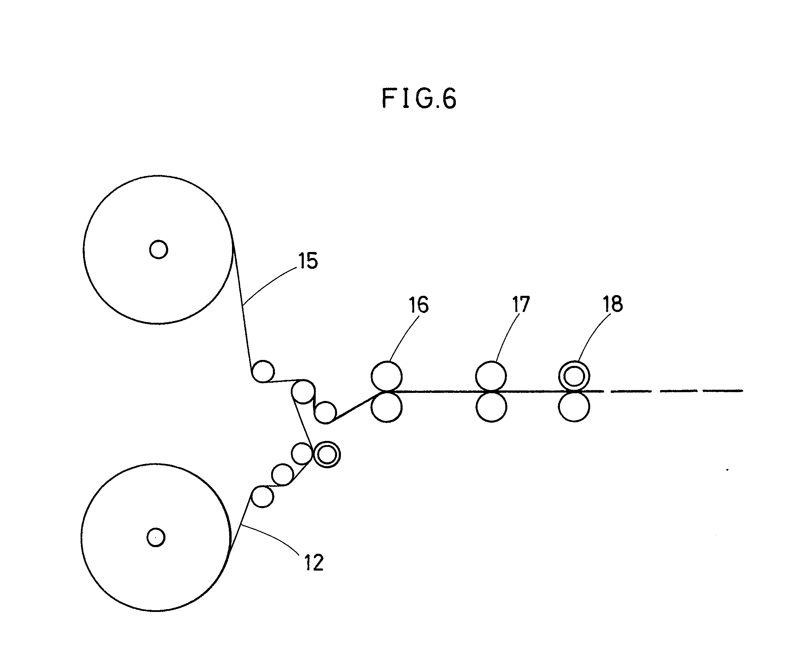

Fig. 6 is a schematic view showing an exemplary final stage of manufacture of the mat according to the invention;

Fig. 7 is a graph showing the time-course of K value during the storage of fish meat on the mat of the invention; and

Fig. 8 is a graph showing the time course of K value during the storage of beef on the mat of the invention.

## DETAILED DESCRIPTION OF THE PREFERRED EMBODIMENTS

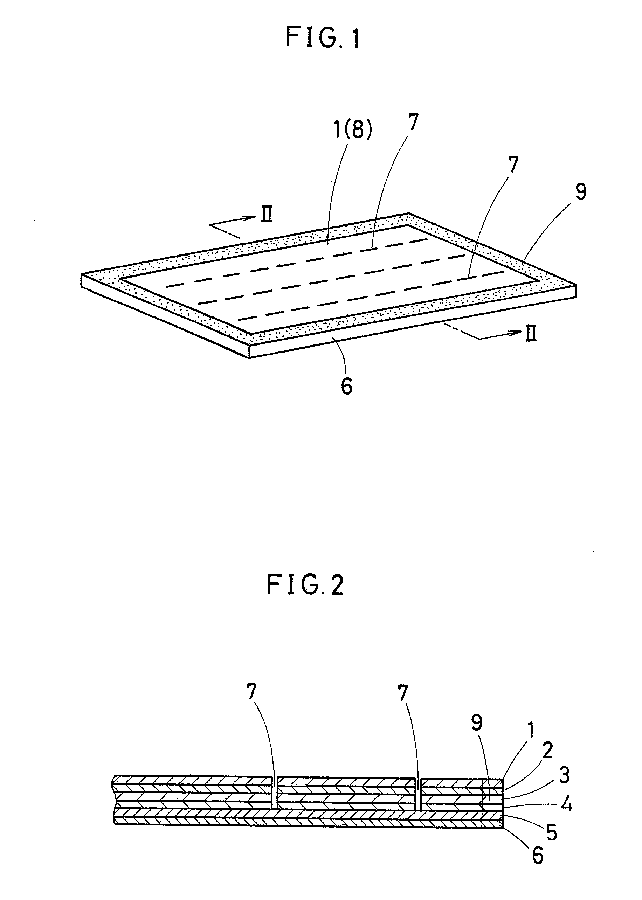

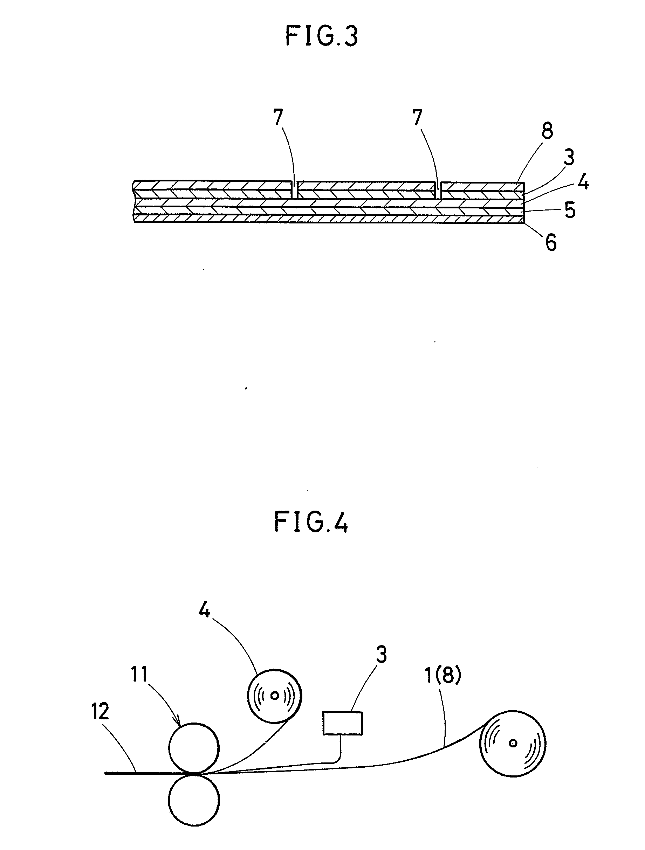

Referring to Figs. 1 and 2, the food mat according to the invention comprises a light-transparent synthetic resin film 1 having a vapor-deposited aluminum layer 2 or a light-opaque synthetic resin film 8 (Fig. 3), an adhesive layer 3, a nonwoven fabric 4, a layer 5 comprising a polymeric water absorbent and a solvent-type heat sealing agent, and a paper sheet 6, at least said synthetic resin film layer 1 and adhesive layer 3 being provided with openings or perforations 7 for passage of moisture.

The light-transparent synthetic resin film 1 having a vapor-deposited aluminum layer 2 (hereinafter referred to as Aℓ-deposited film) is a film of polyphenylene oxide (PPO), polyethylene terephthalate (PET), polypropylene (PP) or the like carrying a vapor-deposited aluminum layer, and the thickness of the aluminum layer 2 may range from about 10 to 500 Å and that of the synthetic resin film may range from about 10 to 100 μ.

The light-opaque synthetic resin film layer 8 is a synthetic paper comprising a sheet of polyolefin, such as polypropylene, polyethylene, etc., in which an opacifying agent has been incorporated. Thus, for example, such commercial papers as Toyopearl® (Toyobo Co., Ltd.) and Yupo® (Ohji Yuka Synthetic Paper Co., Ltd.) can be employed. This layer not only prevents drippings once absorbed into the underlying layer form seeping out again but serves to mask the view so that the drippings absorbed into the underlying layer may not be visible from above.

The adhesive layer 3 is intended to integrally join the overlying layers 1 and 2 or 8 with the underlying nonwoven fabric 4 and, in some cases, to increase the integrity of these layers with the double absorbent substratum consisting of said layer 5 comprising a polymeric absorbent and a solvent-type heat sealing agent and said paper 6. For example, a polyethylene laminate which is commonly called 'sandwitch laminate' can be used with advantage. When such polyethylene laminate is utilized, the thickness of the layer 3 is preferably 1 to 10 μ. It should be understood that the adhesive layer 3 is not limited to such polyethylene laminate but may for example be an urethane adhesive layer or a rubber-type adhesive layer.

The nonwoven fabric 4 is intended to allow the immediately underlying polymeric absorbent to absorb food drippings smoothly and with efficiency. The nonwoven fabric 4 may be a nonwoven cellulose fiber sheet or paper or a nonwoven sheet of synthetic fiber such as polyester, acrylonitrile, polypropylene or the like. Generally speaking, a nonwoven fabric excelling in water absorption and diffusion is preferred. More desirably, a cellulose-based nonwoven fabric having a large absorbent capacity is used. Thus, for example, a pulp, rayon or cotton fabric weighing 20 g/m² to 100 g/m² can be employed. As a typical commercial product, TCF® (Nimura Chemical Co., Ltd.) may be mentioned.

The polymeric absorbent used in the invention is what is generally called 'super absorbent polymer' and as such includes pellets of starch-acrylic acid graft polymer, acrylic acid polymer, water-soluble polymers rendered water-insoluble by partial crosslinking, starch-sodium acrylate graft polymer, hydrolyzate of starch-acrylonitrile graft polymer, partially crosslinked starch- poly(meth)acrylic acid copolymer, hydrolyzate of partially crosslinked starch-polymethyl methacrylate, as well as salts thereof, or pellets of crosslinked synthetic resins represented by hydrolyzate of methyl methacrylate-vinyl acetate copolymer. Taking water as an example, they have an absorptive capacity of 100 to 1000 times per gram. The grain size is as small as possible and optimally not more than 100 mesh.

In addition to said polymeric absorbent, a gas absorbing material such as activated carbon, acid clay, zeolite, etc. may be used in combination. This contributes to the maintenance of freshness of food.

The solvent-type heat sealing agent used in the practice of the invention may be a dispersion of a low-melting thermoplastic resin, such as polyethylene or polypropylene, in a hydrophobic solvent. Such a dispersion displays an adhesive power as the solvent is evaporated by heating or drying. Such a dispersion may contain such additives as wax, plasticizer, antioxidant, filler and so on. As a commercial product, there may be mentioned Cemedine® A-200.

The aforesaid polymeric absorbent and solvent-type heat sealing agent are mixed, coated on paper 6 and dried. The mixing ratio is 1:0.5-2 by weight based on the nonvolatile matter of the latter. Thus, the sealing agent is used in a proportion of 0.5 to 20 g/m² based on 1 to 10 g/m² of the polymeric absorbent.

The paper 6 is so selected that its fiber meshes are smaller than the particle size of said polymeric absorbent and should have a sufficient wet strength to withstand wetting with water and other fluids.

The perforations 7 for passage of water are intended to guide drippings exuded from food to said nonwoven fabric 4. The perforations 7 are slits in the illustrated embodiment but may be of an optional configuration, such as circular, rectangular or triangular. These perforations 7 for passage of water should be reaching the surface of the nonwoven fabric 4 (Fig. 3) but need not extend into the substance of nonwoven fabric 4 as shown in Fig. 2.

The process for fabricating the food mat of the invention is described below.

(1) First, the Aℓ-deposited film 1 or the opaque synthetic resin film 8 and the nonwoven fabric 4 are subjected to sandwich lamination using a polyethylene laminate 3 (See Fig. 4). The reference numeral 11 indicates a roller for pressing said three layers into an integral unit. In the resulting 3-layer sheet 12 are formed perforations 7 for passage of water.

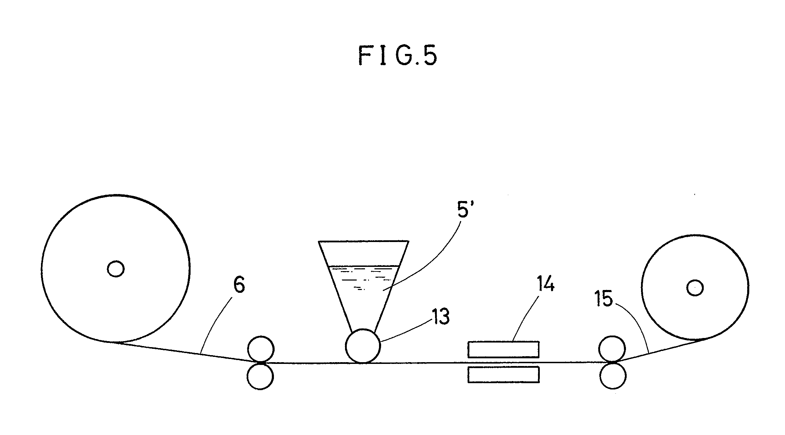

(2) Then, as illustrated in Fig. 5, a dope 5 comprising a mixture of the polymeric absorbent and sorbent-type heat sealing agent is coated on paper 6 by means of a roller 13 and dried using, for example, a hot-air dryer 14.

(3) Lastly, the respective sheets 12 and 15 are heat-sealed by means of a side sealer 16 and a top sealer 17, and the assembly is cut with a cutter 18, whereupon a food mat according to the invention is obtained. The resulting sheet may be of a size suited to the intended application. Thus, it may for example be 70 x 160 mm, 90 x 160 mm or 100 x 200 mm.

The sheet formed to size is then heat-sealed along the transverse sides to finally provide a seal closure 9 as shown in Fig. 1. The method for seal closure may be hot sealing, sealing with an adhesive, or mechanical sealing.

Example 1

Using the food mat according to the invention, a freshness retention test was conducted with regard to fish. Sardine was used as the test food sample and the freshness of the fish was evaluated by the following two methods.

1. Sensory test

The sensory test is an organoleptic evaluation of the degree of freshness using appearance, odor and other qualities as parameters and the freshness of each sample is scored according to the following criteria.
(1) Eye: When the fish is fresh, the eyeballs are prominently protruding and clear. When the fish is stale, the eyes appear dull and opaque.
(2) Skin: The skin of fresh fish is lustrous and has a characteristic color. When the fish is stale, the skin is not as glossy and its color appears fading-out.
(3) Meat: The meat of fresh fish is elastic and gives a sense of transparency. The meat of stale fish lacks elasticity and appears opaque.
(4) Odor: The fish becomes odorous as it becomes stale. It gives a rank odor, with a slight hint of putrefaction.

[Results]

| | After 24 hours | After 72 hours |
|---|---|---|
| When the mat of the invention is used | Good, with blue skin surface. | Yellowing in parts not in contact with the meat. |
| Without the mat of the invention | Yellowing, with copious drippings. | Malodor |

2. The test using the fish freshness index (K value)

This is the index representing the degree of postmortem autolysis of nucleotides and related compounds present in the meat. This test is suitably applied to foods which are delicious only when eaten in a short time after death, such as fish meat, poultry meat and tender animal meat. The principle of the test is as follows. Adenosine triphosphate (ATP), an energy substance in the muscle of fish, is decomposed in a given sequence as follows.

$$ATP \rightarrow ADP \rightarrow AMP \rightarrow IMP \rightarrow HxR \rightarrow Hx$$

Wherein ADP: adenosine diphosphate
AMP: adenosine monophosphate
IMP: inosinic acid
HxR: inosine
Hx: hypoxanthine

The above decomposition proceeds irreversibly under the action of enzymes in the muscle without exception and is unrelated to bacterial actions. The above degradation pathway is common among all fish, inclusive of sardine, mackerel, etc., and animals.

While the fish is alive, ATP is utilized in the energy metabolism of muscle and even if its availability is decreased, it is automatically reproduced in the muscle protein. After death, this reproduction capacity is lost so that autolysis proceeds along the above degradation pathway. Since the final outcomes of autolysis are inosine and hypoxanthine, the percentage of inosine and hypoxanthine to the total nucleotide as calculated by the following equation indicates the degree of loss of freshness according to time after death and environmental temperature. This value is expressed as K. The smaller the value of K, the higher is the freshness of the sample.

4

$$K\ (\%) = \frac{HxR + Hx}{ATP + ADP + AMP + IMP + HxR + Hx}$$

## Test conditions

Storage conditions:

The samples (sardine) were used in group of 3. The mat of the invention is spread in each tray and each sample was placed on the mat and hermetically wrapped around with wrapping film. In the control group, the samples were directly placed in trays and similarly wrapped around.
Storage temperature: 5°C.

Determination of K:

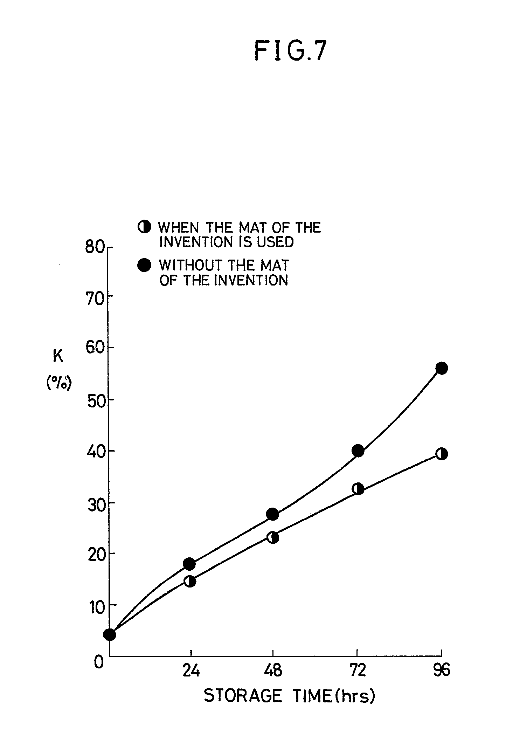

The determination of K was carried out at intervals of 24 hours up to the 4th day.
The results are shown in Fig. 7.
It will be apparent from the data that when the mat of the invention is used, drippings exuded from the fish are completely absorbed into the mat so that the degradation (increase of K) and progress of putrefaction due to contact with drippings are effectively controlled.

## Example 2

Prior to the freshness retention test of beef, the low-temperature bacterial count of the beef and that of drippings from the beef were measured. The method of determination is as follows.
About 300 g of each beef sample (Samples A, B and C) was placed in a tray and after hermetic wrapping with wrapping film, stored in a refrigerator (5°C). After 1 and 2 days of storage, the low-temperature bacterial count of each beef sample and of the drippings from each sample was determined.
For beef and drippings, the low-temperature bacterial count was determined by the shake culture method. The medium used and the cultural conditions were as follows.
Medium: Standard agar medium
Cultural conditions: 10°C, 10 days.

[Results]

| Number of days of storage | Sample | Beef | Drippings |
|---|---|---|---|
| 1 | A | $2.0 \times 10^3$ | $3.3 \times 10^6$ |
|   | B | $1.3 \times 10^4$ | $2.5 \times 10^7$ |
|   | C | $1.6 \times 10^3$ | $7.5 \times 10^5$ |
| 2 | A | $6.3 \times 10^4$ | $4.0 \times 10^7$ |
|   | B | $1.3 \times 10^5$ | $8.5 \times 10^8$ |
|   | C | $5.0 \times 10^4$ | $3.3 \times 10^8$ |

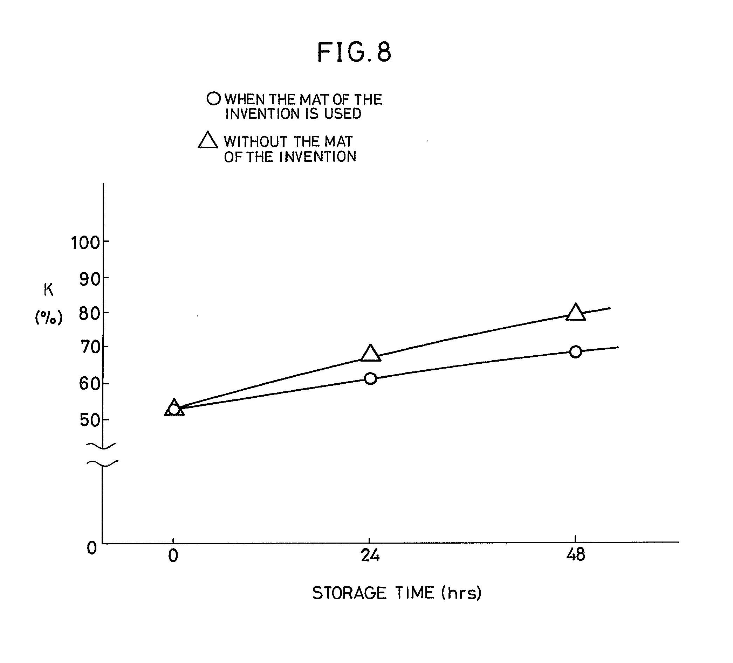

Each figure in the table indicates the bacterial count per gram of beef or drippings.
It is apparent from the data that the low-temperature bacterial count is higher in drippings than in meet substance, pointing clearly to the hygienic problems associated with drippings.
Therefore, when the mat of this invention is used, such unsanitary drippings are completely absorbed and trapped in the mat, thus assuring a high degree of sanitation.
A freshness retention test with the food mat of this invention was conducted for beef using K as an indicator as in Example 1. The test conditions were as follows.
Beef was placed on the mat of this invention in each tray and wrapped around with wrapping film. As a control, beef was directly placed in each tray and hermetically wrapped around with wrapping film. The samples were stored in a refrigerator and the K value was determined after 1 and 2 days of storage.
The results are shown in Fig. 8.

It is apparent from the data that when the mat of the invention is used, drippings from beef are completely absorbed and trapped in the mat, with the result that the degradation (increase of K value) is effectively controlled.

## Claims

1. A mat for food comprising
   (a) a synthetic resin film layer which is opaque or which is transparent and has a layer of aluminium thereon;
   (b) an adhesive layer;
   (c) a nonwoven fabric layer;
   (d) a layer consisting of a polymeric water absorbent and a solvent-type heat sealing agent, and
   (e) a paper sheet,
at least said synthetic resin film layer (a) and adhesive layer (b) having openings therein for the passage of liquid.

2. A mat according to claim 1 having sealed edges.

3. A mat according to claim 2 having heat-sealed edges.

4. A mat according to claim 1, 2 or 3 wherein said adhesive layer is a polyethylene laminate layer.

5. A mat according to any one of the preceding claims wherein said openings for the passage of liquid are slits.

6. A mat according to any one of the preceding claims wherein said nonwoven fabric is a cellulose fabric.

7. A mat according to any one of the preceding claims, which further contains activated carbon.

0295943

# FIG.1

# FIG.2

FIG.3

FIG.4

# FIG.5

5'

6

13

14

15

0295943

# FIG.6

0295943

# FIG.7

◑ WHEN THE MAT OF THE INVENTION IS USED

● WITHOUT THE MAT OF THE INVENTION

K (%)

STORAGE TIME(hrs)

# FIG.8

○ WHEN THE MAT OF THE
INVENTION IS USED

△ WITHOUT THE MAT
OF THE INVENTION

STORAGE TIME (hrs)